Europäisches Patentamt

European Patent Office

Office européen des brevets

(19)

(11) Veröffentlichungsnummer: **0 155 570**

**A2**

## (12) EUROPÄISCHE PATENTANMELDUNG

(21) Anmeldenummer: **85102300.2**

(22) Anmeldetag: **01.03.85**

(51) Int. Cl.⁴: **H 04 B 1/58**

(30) Priorität: **17.03.84 DE 3409879**

(43) Veröffentlichungstag der Anmeldung:
**25.09.85 Patentblatt 85/39**

(84) Benannte Vertragsstaaten:
**AT BE CH DE FR GB IT LI LU NL SE**

(71) Anmelder: **Neumann Elektronik GmbH**
**Bülowstrasse 104 - 110**
**D-4330 Mülheim 1(DE)**

(72) Erfinder: **Neumann, Dirk, Dipl.-Ing.**
**Schemelsbruch 11**
**D-4330 Mülheim-Ruhr 1(DE)**

(74) Vertreter: **Feder, Heinz, Dr. et al,**
**Dominikanerstrasse 37**
**D-4000 Düsseldorf 11(DE)**

(54) **Verfahren zur Anpassung einer Gabelschaltung an eine Fernmeldeleitung sowie Anwendung des Verfahrens und Einrichtung zur Durchführung des Verfahrens.**

(57) Ein Verfahren zur Anpassung einer Gabelschaltung an eine Fernmeldeleitung sowie eine Anwendung des Verfahrens und eine Einrichtung zur Durchführung des Verfahrens. Die mit ihrem bidirektionalen Hauptzweig an die Fernmeldeleitung angeschlossene Gabelschaltung (G1) ist an ihrer dem Hauptzweig gegenüberliegenden Seite mit einem Nachbildungsnetzwerk (NB1) abgeschlossen, das variable, von einem Mikrocomputer (MC1) ansteuerbare Impedanzen enthält. Dem einen Nebenzweig der Gabelschaltung (G1) wird ein Prüfsignal mit konstantem Signalpegel zugeführt und es wird der in den anderen Nebenzweig der Gabelschaltung (G1) in Abhängigkeit von der Gabelübergangsdämpfung übertretende Anteil des Signalpegels fortlaufend gemessen. Vor jeder Messung wird die variable Impedanz vom Mikrocomputer (MC1) auf einen anderen Wert eingestellt und die erhaltenen Meßwerte des übertretenden Anteils des Signalpegels werden miteinander verglichen. Es wird jeweils der kleinste, einem bestimmten Impedanzwert zugeordnete Meßwert gespeichert und nach einer vorgegebenen Anzahl von Messungen das Nachbildungsnetzwerk auf einen Impedanzwert fest eingestellt, der dem kleinsten gemessenen Wert des übergetretenen Anteils des Signalpegels entspricht.

./...

FIG. 1

Verfahren zur Anpassung einer Gabelschaltung an eine Fernmeldeleitung sowie Anwendung des Verfahrens und Einrichtung zur Durchführung des Verfahrens.

Die Erfindung betrifft ein Verfahren zur Anpassung einer Gabelschaltung an eine Fernmeldeleitung, bei dem die mit ihrem bidirektionalen Hauptzweig an die Fernmeldeleitung angeschlossene Gabelschaltung an ihrer dem Hauptzweig gegenüberliegenden Seite mit einem Nachbildungsnetzwerk abgeschlossen ist.

Derartige Gabelschaltungen werden beispielsweise in bidirektionalen Verstärkerschaltungen eingesetzt, bei denen für die beiden Sprechrichtungen getrennte, in einer Gabelverstärkerschaltung angeordnete Verstärker vorgesehen sind.

Von besonderer Bedeutung sind solche bidirektionalen Verstärkerschaltungen in sogenannten Anruf-Weiterschaltungen bei Fernsprechanlagen, mit denen Anrufe, die einem bestimmten Anschluß gelten, zu einem anderen, unter Umständen weit entfernten Anschluß über Fernverbindungsleitungen weitergeschaltet werden.

Ein besonderes Problem bei derartigen Gabelschaltungen stellt ihre Anpassung an die Fernmeldeleitung dar, die im allgemeinen in der oben angegebenen Weise mit Nachbildungsnetzwerken bewirkt wird, die aus Widerständen und Kondensatoren aufgebaut sind und jeweils einen fest eingestellten Impedanzwert aufweisen.

Es ist bekannt, daß eine ideale Anpassung einer Gabelschaltung dann erzielt wird, wenn der komplexe Nachbildungswiderstand mit dem Eingangsscheinwiderstand der angeschlossenen Fernmeldeleitung übereinstimmt (s. Bergmann: "Lehrbuch der Fernmeldetechnik", Fachverlag Scheile & Schön GmbH, Berlin, 4. Aufl., 1978, S. 304 bis 306).

Die Anpassung einer Gabelschaltung an eine Fernmeldeleitung mit derart aufgebauten Nachbildungsnetzwerken ist aber sehr aufwendig, weil, um eine genaue Anpassung zu erhalten, an jedem Anschluß Impedanzmessungen vorgenommen werden müssen, um den Eingangswiderstand der Fernmeldeleitung an die Gabelschaltung zu bestimmen und es müssen dann zur Erzielung der Anpassung entsprechend verschieden dimensionierte oder justierbare Nachbildungsnetzwerke verwendet werden. Diese Arbeit kann nur von Fachleuten mit beträchtlichem Aufwand durchgeführt werden.

Wenn dieser Aufwand vermieden werden soll und nur eine begrenzte Anzahl verschieden dimensionierter Nachbildungsnetzwerke verwendet werden, bleibt die Anpassung der Gabelschaltung unbefriedigend, was sich bekanntlich sehr nachteilig auf die Gabelübergangsdämpfung auswirkt. Besonders kritisch ist die Situation, bei den oben erwähnten Anruf-Weiterschaltungen, da in diesem Fall eine eindeutige Zuordnung zwischen einer Verstärkerschaltung und einer bestimmten Fernmeldeleitung nicht mehr gegeben ist und ein sehr unterschiedliches Dämpfungsverhalten der Fernmeldeleitung auftreten kann, was zur Folge hat, daß die Anpassungsbedingungen im Betrieb ständig wechseln können.

Bei einer Fehlanpassung und einer entsprechend verminderten Gabelübergangsdämpfung ist aber der erzielbare Verstärkungsgrad sehr begrenzt, da bei zu hoher Verstärkung sehr leicht Rückkopplungsschwingungen in der Gabelverstärkerschaltung einsetzen können.

Es ist bekannt, bei derartigen Gabelverstärkerschaltungen für jede Sprechrichtung einen steuerbaren Verstärker vorzusehen und das Übertragungsverhalten der beiden in der Gabel----------------------------------------------------

verstärkerschaltung angeordneten Verstärker durch eine Steuereinrichtung zueinander gegensinnig derart zu steuern, daß die Summe beider Verstärkungen im logarithmischen Maß den zweifachen Minimalwert der Gabelübergangsdämpfung nicht übersteigt (DE-OS 30 46 488).

Es ist weiterhin eine Schaltungsanordnung zum Ausgleich unterschiedlichen Dämpfungsverhaltens von Fernmeldeleitungen bekannt (DE-OS 32 26 279), bei der die Anpassung der Gabelschaltung an die Fernmeldeleitung insofern berücksichtigt wird, als die Verstärkungen in den beiden Verstärkern der Gabelverstärkerschaltung derart gegensinnig gesteuert wird, daß beim Einsetzen von Rückkopplungsschwingungen die Verstärkung des in der passiven Richtung wirksamen Verstärkers zurückgesteuert wird.

Aber auch bei derartigen Einrichtungen bleibt der Verstärkungsgrad infolge der Fehlanpassung der Gabelschaltung bei bestimmten Leitungszuständen begrenzt.

Die der Erfindung zugrunde liegende Aufgabe bestand darin, ein Verfahren zur Anpassung einer Gabelschaltung der eingangs erwähnten Art zu schaffen, mit dem die Gabelschaltung und insbesondere eine Gabelschaltungen aufweisende bidirektionale Verstärkerschaltung automatisch und optimal an eine Fernmeldeleitung, insbesondere eine hinsichtlich ihres Eingangswiderstandes wechselnde Werte aufweisende Fernmeldeleitung, angepaßt werden kann.

Die Lösung dieser Aufgabe geschieht erfindungsgemäß mit den Merkmalen aus dem kennzeichnenden Teil des Patentanspruchs 1.

Die Erfindung geht von dem Grundgedanken aus, die maximale Gabelübergangsdämpfung durch Messung für eine größere Anzahl von Impedanzwerten des Nachbildungsnetzwerkes zu bestimmen und dann am Nachbildungsnetzwerk den Impedanzwert fest einzustellen, der dem kleinsten gemessenen Wert der Gabelübergangsdämpfung entspricht. Dabei wird die Gabelübergangsdämpfung bestimmt, indem dem einen Nebenzweig der Gabel ein Prüfsignal mit konstantem Signalpegel zugeführt wird und jeweils festgestellt wird, welcher Anteil des zugeführten Signalpegels in Abhängigkeit von der Gabelübergangsdämpfung in den anderen Nebenzweig der Gabelschaltung übertritt. Vor jeder dieser Messungen wird der Impedanzwert des Nachbildungsnetzwerkes in vorgegebener Weise verändert.

Dieses Verfahren läßt sich außerordentlich gut automatisieren, indem die Auswertung der Messung und die Steuerung der variablen Impedanzen von einem Mikrocomputer aus erfolgt. Auf diese Weise können innerhalb relativ kurzer Zeit eine große Anzahl von Messungen ausgeführt und der geeignetste Impedanzwert ausgewählt und eingestellt werden. Es ist so eine rasche und sehr gute Anpassung der Gabelschaltung an die Fernmeldeleitung möglich und diese Anpassung kann in gewissen Abständen wiederholt werden, beispielsweise zu Beginn jedes Gespräches, so daß auch bei wechselnden Leitungseigenschaften, wie sie bei Anruf-Weiterschaltugen auftreten, jeweils in kürzester Zeit eine optimale Anpassung der Gabelschaltung an die Fernmeldeleitung erreicht werden kann.

Vorteilhafte Ausführungsformen des erfindungsgemäßen Verfahrens sind in den Ansprüchen 2 und 3 beschrieben.

Das erfindungsgemäße Verfahren ermöglicht es weiterhin, in einer Fernsprechanlage mit einer bidirektionalen Verstärkerschaltung bei optimaler Anpassung der Gabelschaltungen die Beendigung eines Gespräches in einfacher Weise zu erkennen.

Es hat sich nämlich herausgestellt, daß es bei Fernsprechanlagen mit einer Anruf-Weiterschaltung oft außerordentlich schwierig ist, in der Vermittlungsstelle festzustellen, ob ein Gespräch beendet ist, bzw. ob der anrufende Teilnehmer den Telefonhörer auf die Gabel gelegt hat.

Dies kann zur Folge haben, daß auch nach Gesprächsende die Gebührenzähler weiterlaufen und somit Gebühreneinheiten berechnet werden für Zeiten, in denen kein Gespräch stattfand.

Es ist bekannt, in der Vermittlungsstelle eine Überprüfung der Fernsprechleitung auf "Gesprächsbeendigung" durchzuführen, indem die Leitung in gewissen Zeitabständen kurzzeitig unterbrochen wird und bestimmte, bei der Unterbrechung auftretende Spannungswerte gemessen werden. Dieses Unterbrechen der Leitung ist aber, wenn das Gespräch noch nicht beendet ist, für die Teilnehmer mit außerordentlich unangenehmen Störgeräuschen verbunden.

Das erfindungsgemäße Verfahren in seiner Anwendung gemäß Patentanspruch 4 bietet eine Möglichkeit, in einfacher Weise die Beendigung eines Gespräches festzustellen. Dabei wird von der Erkenntnis ausgegangen, daß bei optimal angepaßter Gabelschaltung sich die Anpassungsverhältnisse in dem Augenblick ändern, indem das Gespräch beendet ist und der Hörer auf die Gabel gelegt wird. Diese Änderung der Anpassungsverhältnisse kann festgestellt werden, indem wiederum das Prüfsignal dem einen Nebenzweig der Gabelschaltung zugeführt und der in den anderen Nebenzweig übergetretene Signalpegelanteil gemessen wird. Eine starke Änderung des gemessenen Wertes deutet auf eine Beendigung des Gespräches hin.

Gegenstand der Erfindung ist weiterhin eine Einrichtung zur Durchführung des erfindungsgemäßen Verfahrens, die in Patentanspruch 5 beschrieben ist. Vorteilhafte Ausführungsformen der Einrichtung sind Gegenstand der Unteransprüche 6 bis 14.

Dadurch, daß die Einrichtung zur Durchführung des erfindungsgemäßen Verfahrens einen Mikrocomputer aufweist, ist es möglich, in relativ kurzer Zeit eine große Anzahl von Messungen durchzuführen, die Ergebnisse miteinander zu vergleichen, den Optimalwert zu speichern und die entsprechende Einstellung am Nachbildungsnetzwerk vorzunehmen.

Dabei können, je nach dem Einsatzfall, die durch den Signalgenerator erzeugten Prüfsignale sehr unterschiedlicher Natur sein. Es kann ein Prüfsignal mit einer fest vorgegebenen Frequenz verwendet werden. Es können aber auch Prüfsignale mit mehreren Frequenzen verwendet werden, die gleichzeitig oder aufeinanderfolgend ausgesandt werden und die es erlauben, die Anpassung für einen gewissen Übertragungsbereich zu optimalisieren. So kann beispielsweise als Prüfsignal auch ein den Anrufern die Weiterschaltung oder Zuschaltung weiterer Teilnehmer signalisierendes Gongsignal verwendet werden.

Weiterhin kann es besonders vorteilhaft sein, als Prüfsignal ein Signal zu verwenden, dessen Frequenz der in der Schaltung bei zu hoher Verstärkung sich einstellenden Rückkopplungsfrequenz entspricht, weil in diesem Bereich eine besonders gute Anpassung erforderlich ist, um hohe Verstärkung zu ermöglichen.

Das Nachbildungsnetzwerk besteht zweckmäßig aus parallelgeschalteten Widerständen und Kondensatoren mit vorgegebenen Widerstands- bzw. Kapazitätswerten, wobei durch wechselweises Parallelschalten über steuerbare Schaltelemente eine große Anzahl von Impedanzwerten erzeugt werden kann. So können beispielsweise bei vier Widerständen und vier Kondensatoren, die einander parallelgeschaltet sind, 256 verschiedene Impedanzwerte eingestellt und zur Optimalisierung der Anpassung der Gabelschaltung verwendet werden. Diese 256 verschiedenen Werte für das Nachbildungsnetzwerk können mikroprozessorgesteuert in etwa 5 Sekunden durchgeprüft werden. Die damit erzielte optimale Nachbildung wird dann für die Dauer des betreffenden Gesprächszustandes gespeichert.

Im folgenden wird anhand der beigefügten Zeichnungen ein Ausführungsbeispiel für eine Einrichtung zur Durchführung des erfindungsgemäßen Verfahrens näher erläutert.

In den Zeichnungen zeigen:

Fig. 1 in einem Blockschaltbild eine in eine Fernmeldeleitung eingeschaltete bidirektionale Verstärkerschaltung mit einer Einrichtung zur Anpassung der Gabelschaltungen;

Fig. 2 in etwas detaillierterer Darstellung die Einrichtung an der einen der beiden Gabelschaltungen der Einrichtung nach Fig. 1.

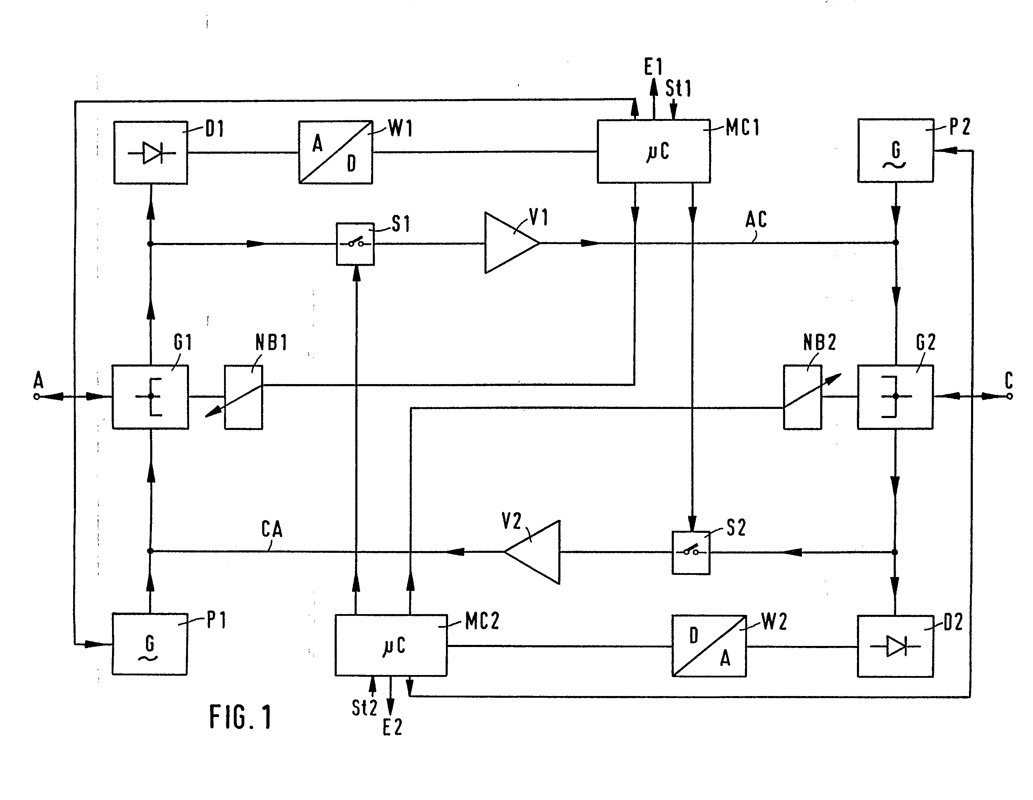

Die Einrichtung nach Fig. 1 weist eine Gabelverstärkerschaltung mit den Gabelschaltungen G1 und G2 und dem von einem Teilnehmer A zu einem Teilnehmer C führenden Zweig AC und einem vom Teilnehmer C zum Teilnehmer A führenden Zweig CA einer Fernmeldeleitung auf. Im Zweig AC befindet sich ein Verstärker V1, während im Zweig CA ein Verstärker V2 angeordnet ist.

Bei der Gabelschaltung G1 ist an der dem bidirektionalen zum Teilnehmer A führenden Hauptzweig gegenüberliegenden Seite ein Nachbildungsnetzwerk NB1 angeordnet, dessen Impedanzwerte in weiter unten näher erläuterter Weise von einem der Gabelschaltung G1 zugeordneten Mikrocomputer MC1 her einstellbar sind. Ebenso ist an der dem bidirektionalen, zum Teilnehmer C führenden Hauptzweig der Gabelschaltung G2 gegenüberliegenden Seite ein Nachbildungsnetzwerk NB2 angeordnet, dessen Impedanzwerte von einem der Gabelschaltung G2 zugeordneten Mikrocomputer MC2 her einstellbar sind.

Der Mikrocomputer MC1 steuert gleichzeitig einen im Leitungszweig CA vor dem Verstärker V2 angeordneten ansteuerbaren Schalter S2, durch den der Leitungszweig CA unterbrochen werden kann. Weiterhin steuert er einen Signalgenerator P1, der an den einen mit dem Leitungszweig CA verbunden Nebenzweig der Gabelschaltung G1 angeschlossen ist. Der andere an den Leitungszweig AC angeschlossene Nebenzweig der Gabelschaltung G1 ist über einen als Spitzenwertgleichrichter ausgebildeten Signalempfänger D1 und einen Analog-Digital-Wandler W1 an den Mikrocomputer MC1 angeschlossen.

Der Mikrocomputer MC2 steuert in analoger Weise einen in den Leitungszweig AC vor dem Verstärker V1 eingeschalteten ansteuerbaren Schalter S1 mit dem der Leitungszweig AC unterbrochen werden kann. Er steuert außerdem einen Signalgenerator P2, der an den mit dem Leitungszweig AC verbundenen Nebenzweig der Gabelschaltung G2 angeschlossen ist. Der andere mit dem Leitungszweig CA ver- bundene Nebenzweig der Gabelschaltung G2 ist über den als Spitzenwertgleichrichter ausgebildeten Signalempfänger D2 und einen Analog-Digital-Wandler W2 mit dem Mikrocomputer MC2 verbunden.

Die Ansteuerung der beiden Mikrocomputer MC1 und MC2 erfolgt über die Starteingänge St1 und St2.

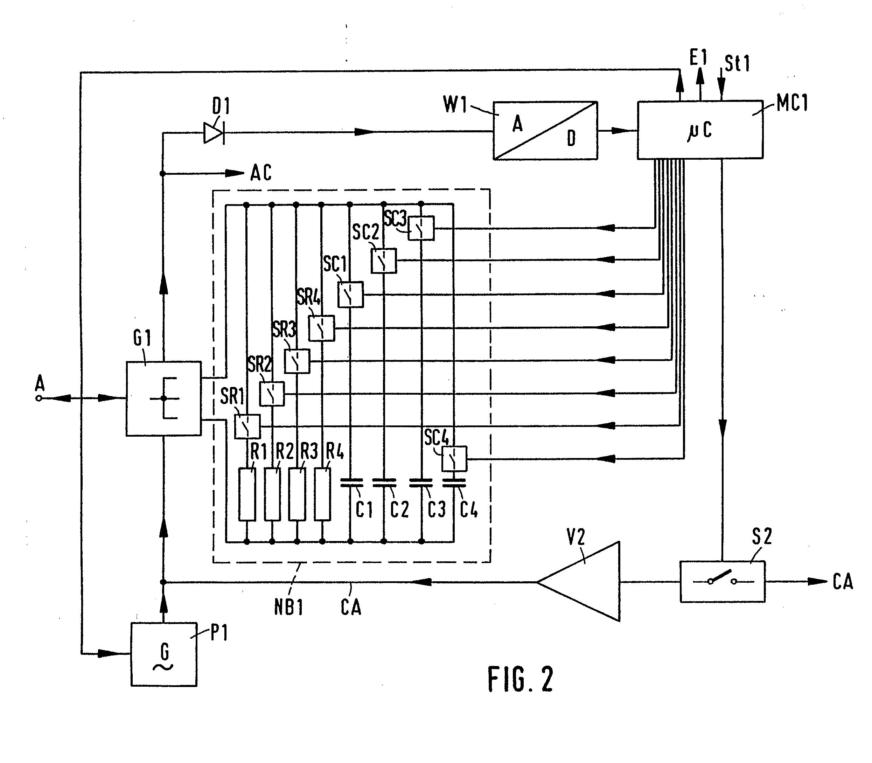

Die Funktionsweise der dargestellten Einrichtung und die Durchführung des Verfahrens zur Anpassung der Gabelschaltungen an die Fernmeldeleitung wird im folgenden für die Gabelschaltung G1 anhand von Fig. 2 erläutert.

Die Gabelschaltung G1 ist an der dem Hauptzweig gegenüberliegenden Seite mit einem Nachbildungsnetzwerk NB1 abgeschlossen, das vier Widerstände R1 bis R4 und vier Kondensatoren C1 bis C4 aufweist, die alle zueinander parallelgeschaltet sind. In jeden der zu einem der Widerstände R1 bis R4 oder Kondensatoren C1 bis C4 führenden Parallelzweige ist ein steuerbares Schaltelement SR1 bis SR4 bzw. SC1 bis SC4 eingeschaltet. Die Steuereingänge dieser steuerbaren Schaltelemente sind mit Steuerausgängen des Mikrocomputers MC1 verbunden.

Das in Fig. 2 dargestellte Nachbildungsnetzwerk NB1 ist in vereinfachter Weise dargestellt. Bei praktischen Ausführungen ist im allgemeinen jedem der Kondensatoren C1 bis C4 ein ohmscher Widerstand in Serie geschaltet. Diese Widerstände können auch durch die inneren Widerstände der Schaltelemente SC1 bis SC4 gegeben sein.

Selbstverständlich kann das Nachbildungsnetzwerk auch unter zusätzlicher Verwendung von Induktivitäten aufgebaut sein.

Soll nun beispielsweise bei Beginn eines Gespräches die Gabelschaltung G1 optimal an die zum Teilnehmer A führende Fernmeldeleitung angepaßt werden, so wird zunächst der Leitungszweig CA mittels des Schalters S2 vom Mikrocomputer MC1 aus unterbrochen, damit Rückkopplungserscheinungen mit Sicherheit vermieden werden. Es wird dann ebenfalls gesteuert vom Mikrocomputer MC1 aus vom Signalgenerator P1 ein Prüfsignal in den mit dem Leitungszweig CA verbundenen Nebenzweig der Gabelschaltung G1 gegeben. Gleichzeitig wird am Nachbildungsnetz-werk NB1 vom Mikrocomputer MC1 aus eine bestimmte vorgegebene Kombination aus den Widerständen R1 bis R4 und den Kondensatoren C1 bis C4 über die ansteuerbaren Schaltelemente SR1 bis SR4 und SC1 bis SC4 eingestellt. Der größte Anteil des vom Signalgenerator P1 abgegebenen Signalpegels soll über die Gabelschaltung G1 in den bidirektionalen Zweig der Gabelschaltung und dann in die zum Teilnehmer A führende Fernmeldeleitung laufen. Ein gewisser Anteil des Signalpegels wird infolge der begrenzten Gabelübergangsdämpfung in den anderen Nebenzweig geleitet, der mit dem Leitungszweig AC verbunden ist. Dieser Anteil des Signalpegels wird vom Spitzenwertgleichrichter D1 empfangen und dem Analog-Digital-Wandler W1 zugeführt, der den Signalwert in einen Digitalwert umwandelt und dem Mikrocomputer MC1 zuführt. Es wird nun taktweise die am Nachbildungsnetzwerk NB1 eingestellte Kombination aus Widerstandswerten und Kapazitätswerten verändert und jeweils der in den mit dem Leitungszweig AC verbundenen Nebenzweig der Gabelschaltung G1 übertretende Signalpegel gemessen und der Meßwert in der oben beschriebenen Weise dem Mikrocomputer MC1 zugeführt. Dort werden jeweils zwei aufeinanderfolgende Meßwerte miteinander verglichen und der kleinere von beiden wird gespeichert. Auf diese Weise wird schließlich der Minimalwert eines gemessenen Signalpegelanteils ermittelt. Diesem Minimalwert des gemessenen Signalpegelanteils entspricht eine ganz bestimmte, am Nachbildungsnetzwerk NB1 eingestellte Kombination aus den Widerständen R1 bis R4 und den Kondensatoren C1 bis C4. Die dem minimalen Meßwert des Signalpegelanteils entsprechende Kombination, die ebenfalls im Mikrocomputer MC1 gespeichert wurde, wird nunmehr am Nachbildungsnetzwerk NB1 eingestellt und damit ist die Gabelschaltung G1 optimal an die zum Teilnehmer A führende Fernmeldeleitung angepaßt. Der Schalter S2 wird wieder geschlossen und das Gespräch kann beginnen. In analoger Weise wird auch die Gabelschaltung G2 an die zum Teilnehmer C führende Leitung angepaßt.

Bei jeder Veränderung im Leitungszustand der zum Teilnehmer A oder zum Teilnehmer C führenden Fernmeldeleitung kann dieses Meßverfahren wiederholt werden, also insbesondere dann, wenn infolge einer Anruf-Weiterschaltung der Leitungszustand verändert wird, oder wenn in einer Konferenzschaltung, die über Fernverbindungsleitungen läuft, weitere Teilnehmer hinzugeschaltet werden.

Es gibt Einsatzfälle, in denen ein vom Anrufer, beispielsweise dem Teilnehmer A, sofort über die Leitung gegebenes Sprachsignal die zur Anpassung der Gabelschaltung G1 erforderlichen, oben beschriebenen Messungen stören könnte. In diesem Falle kann beispielsweise durch eine Ansage der Anrufer auf die Weiterschaltung seines Gespräches und die vorher durchzuführende Messung hingewiesen werden und es kann dann die Freigabe des Gesprächsbeginns durch ein eigenes Signal angezeigt werden. Dieses eigene Signal kann beispielsweise auch das vom Generator P1 erzeugte Prüfsignal, insbesondere die Beendigung dieses Prüfsignals, sein.

Die in den Fig. 1 und 2 dargestellte Schaltung kann in einfacher Weise auch dazu verwendet werden, die Beendigung eines Gespräches festzustellen. Hierzu wird zu Beginn des Gespräches in der bereits beschriebenen Weise jede der beiden Gabelschaltungen G1 und G2 optimal an die Fernmeldeleitung angepaßt. Der Wert des im optimal angepaßten Zustand gemessenen,in den Nebenzweig übergetretenen Signalpegelanteils wird in den Mikrocomputern MC1 und MC2 gespeichert.

Um nun beispielsweise festzustellen, ob der Teilnehmer A das Gespräch beendet bzw. den Hörer aufgelegt hat, wird der Zweig CA in regelmäßigen Abständen, beispielsweise alle 6 Sekunden für ca. 10ms, unterbrochen, indem dem ansteuerbaren Schalter S2 das entsprechende Signal vom Mikrocomputer MC1 aus zugeführt wird. Die Unterbrechungszeiten von nur 10ms sind im Sprachbereich kaum wahrnehmbar, so daß der Teilnehmer A durch sie nicht gestört wird. Während der Unterbrechungszeit des Zweiges CA wird nun wiederum nach Aussendung des Prüfsignals vom Generator P1 aus gemessen, wie groß der in den mit dem Leitungszweig AC übergetretene Signalpegelanteil ist. Der gemessene Wert wird mit dem gespeicherten Optimalwert verglichen. Liegt eine Änderung des Wertes vor, die einen bestimmten vorgegebenen Wert überschreitet, so wird daraus geschlossen, daß sich der Leitungszustand durch Beendigung des Gespräches seitens des Teilnehmers A geändert hat. Es wird in diesem Falle vom Microcomputer MC1 aus über einen eigenen Ausgang E1 ein Steuersignal abgegeben, daß der Vermittelungsstelle die Beendigung des Gespräches anzeigt und dort gegebenenfalls weiterverarbeit t wird.

- 13 -

0155570

In analoger Weise kann an der Gabelschaltung G2 festgestellt werden, ob der Teilnehmer C das Gespräch beendet
hat, wobei vom Mikrocomputer MC2 über den Ausgang E2 ein
entsprechendes Steuersignal abgegeben wird.

Patentansprüche:

1. Verfahren zur Anpassung einer Gabelschaltung an eine Fernmeldeleitung, bei dem die mit ihrem bidirektionalen Hauptzweig an die Fernmeldeleitung angeschlossene Gabelschaltung an ihrer dem Hauptzweig gegenüberliegenden Seite mit einem Nachbildungsnetzwerk abgeschlossen ist, dadurch gekennzeichnet, daß das Nachbildungsnetzwerk (NB1, NB2) variable, ansteuerbare Impedanzen (R1 bis R4, C1 bis C4) enthält und dem einen Nebenzweig der Gabelschaltung (G1, G2) ein Prüfsignal mit konstantem Signalpegel zugeführt wird und der in den anderen Nebenzweig der Gabelschaltung (G1, G2) in Abhängigkeit von der Gabelübergangsdämpfung übertretende Anteil des Signalpegels fortlaufend gemessen wird, wobei vor jeder Messung die variable Impedanz in vorgegebener Weise auf einen anderen Wert eingestellt wird und die erhaltenen Meßwerte des übertretenden Anteils des Signalpegels miteinander verglichen und den entsprechenden Impedanzwerten zugeordnet werden und nach einer vorgegebenen Anzahl von Messungen das Nachbildungsnetzwerk (NB1, NB2) auf einen Impedanzwert fest eingestellt wird, der dem kleinsten gemessenen Wert des übergetretenen Anteils des Signalpegels entspricht.

2. Verfahren nach Anspruch 1, dadurch gekennzeichnet, daß die Einstellung der variablen Impedanz mit einer vorgegebenen Taktfrequenz erfolgt und fortlaufend der kleinere von zwei aufeinanderfolgenden gemessenen Werten des übergetretenen Anteils des Signalpegels sowie der ihm zugeordnete Impedanzwert gespeichert werden und der letzte, nach der vorgegebenen Anzahl von Messungen gespeicherte Impedanzwert zur festen Einstellung des Nachbildungsnetzwerkes (NB1, NB2) dient.

3. Verfahren nach Anspruch 1 oder 2, dadurch gekennzeichnet, daß zur Anpassung einer in eine Fernmeldeleitung eingeschalteten, zwei gegeneinander geschaltete Gabelschaltungen (G1-G2) aufweisenden bidirektionalen Verstärkerschaltung an die Fernmeldeleitung für jede der beiden Gabelschaltungen (G1, G2) das Anpassungsverfahren durchgeführt wird, wobei in jedem der beiden Nebenzweige der Gabelschaltungen (G1, G2) während der Messung die Verbindung zwischen dem Einspeisungspunkt des Prüfsignals an der einen Gabelschaltung (G1 bzw. G2) und dem Meßpunkt für den übergetretenen Anteil des Signalpegels an der anderen Gabelschaltung (G2 bzw. G1) unterbrochen ist.

4. Anwendung des Verfahrens nach Anspruch 3 in einer Fernsprechanlage zur Erkennung der Beendigung eines Gesprächs, dadurch gekennzeichnet, daß zu Beginn des Gesprächs das Verfahren zur Anpassung der Gabelschaltungen durchgeführt wird und während des Gesprächs in vorgegebenen Zeitabständen der Signalfluß in mindestens einem der Zweige der Verstärkerschaltung kurzzeitig unterbrochen und mindestens bei einer der Gabelschaltungen dem einen Nebenzweig das Prüfsignal zugeführt und im anderen Nebenzweig der übertretende Anteil des Signalpegels gemessen und mit dem bei der vorhergehenden Messung gemessenen Anteil verglichen wird und ein Steuersignal erzeugt wird, sobald zwischen zwei aufeinanderfolgenden Meßwerten eine vorgegebene Differenz überschritten wird.

5. Einrichtung zur Durchführung des Verfahrens nach einem der Ansprüche 1 bis 4, dadurch gekennzeichnet, daß jeder Gabelschaltung ein Mikrocomputer (MC1) zugeordnet ist, der mit Steuerelementen (SR1 bis SR4, SC1 bis SC4) der variablen ansteuerbaren Impedanzen (R1 bis R4, C1 bis C4) eines die Gabelschaltung (G1) an ihrer dem Hauptzweig gegenüberliegenden Seite abschließenden Nachbildungsnetzwerkes (NB1) verbunden ist und dessen Steuersignale den Wert der Gesamtimpedanz in vorgegebener Weise ändern und der eine Nebenzweig der Gabelschaltung (G1) mit einem vom Mikrocomputer (MC1) her ansteuerbaren Signalgenerator (P1) verbunden ist, während der andere Nebenzweig der Gabelschaltung (G1) mit dem Eingang eines Signalempfängers (D1) verbunden ist, dessen Ausgang ein vom gemessenen Signalpegelanteil abhängiges Steuersignal abgibt, das über einen Analog-Digital-Wandler (W1) dem Mikrocomputer (MC1) zugeführt wird zum Vergleich aufeinanderfolgender Meßwerte, zur Speicherung des Minimalmeßwertes und zur Steuerung der Gesamtimpedanz des Nachbildungsnetzwerkes (NB1) auf den den Minimalmeßwert entsprechenden Impedanzwert.

6. Einrichtung nach Anspruch 5, dadurch gekennzeichnet, daß als Signalempfänger ein Spitzenwertgleichrichter (D1) dient.

7. Einrichtung nach Anspruch 5 oder 6, dadurch gekennzeichnet, daß als Signalgenerator ein Tonfrequenzgenerator (P1) dient.

8. Einrichtung nach Anspruch 7, dadurch gekennzeichnet, daß der Tonfrequenzgenerator aufeinanderfolgende Signale unterschiedlicher Frequenz abgibt.

9. Einrichtung nach Anspruch 7, dadurch gekennzeichnet, daß der Tonfrequenzgenerator ein aus einem vorgegebenen Frequenzspektrum bestehendes Signal abgibt.

10. Einrichtung nach Anspruch 7 in einer bidirektionalen Verstärkerschaltung mit zwei gegeneinander geschalteten Gabelschaltungen (G1, G2), dadurch gekennzeichnet, daß der Tonfrequenzsender ein Signal abgibt, dessen Frequenz der sich bei Einsetzen der Rückkopplung in der Verstärkerschaltung (G1-V1-G2-V2) einstellenden Frequenz der Rückkopplungsschwingungen entspricht.

11. Einrichtung nach Anspruch 5 oder 6, dadurch gekennzeichnet, daß als Signalgenerator ein Rauschgenerator dient.

12. Einrichtung nach Anspruch 5, dadurch gekennzeichnet, daß das Nachbildungsnetzwerk (NB1) eine vorgegebene Anzahl von einander parallelgeschalteten ohmschen Widerständen (R1 bis R4) und Kondensatoren (C1 bis C4) aufweist, wobei in der Zuleitung zu jedem der Widerstände und jedem der Kondensatoren ein steuerbares Schaltelement (SR1 bis SR4, SC1 bis SC4) angeordnet ist.

13. Einrichtung nach Anspruch 12, dadurch gekennzeichnet, daß das Nachbildungsnetzwerk (NB1) aus je vier zu-

einander parallelgeschalteten Widerständen (R1 bis R4) und vier Kondensatoren (C1 bis C4) mit unterschiedlichen Widerstandswerten bzw. Kapazitäten aufgebaut ist.

14. Einrichtung nach Anspruch 13, dadurch gekennzeichnet, daß sich die Widerstandswerte bzw. die Kapazitätswerte wie 1:2:4:8 verhalten.

FIG. 1

FIG. 2

0155570